Europäisches Patentamt

European Patent Office

Office européen des brevets

(19)

(11) Veröffentlichungsnummer : **0 143 902**
**B1**

(12) # EUROPÄISCHE PATENTSCHRIFT

(45) Veröffentlichungstag der Patentschrift :
27.05.87

(51) Int. Cl.⁴ : **B 01 D 53/20**

(21) Anmeldenummer : **84110051.4**

(22) Anmeldetag : **23.08.84**

(54) **Füllkörper für Stoffaustauschkolonnen.**

(30) Priorität : **25.10.83 DE 8330573 U**

(43) Veröffentlichungstag der Anmeldung :
**12.06.85 Patentblatt 85/24**

(45) Bekanntmachung des Hinweises auf die Patenterteilung : **27.05.87 Patentblatt 87/22**

(84) Benannte Vertragsstaaten :
**AT BE CH DE FR GB IT LI LU NL SE**

(56) Entgegenhaltungen :
**EP-A- 0 070 918**
**FR-A- 2 303 926**
**GB-A- 2 021 970**
**US-A- 3 311 356**

(73) Patentinhaber : **Vereinigte Füllkörper-Fabriken GmbH & Co.**
**Rheinstrasse 176**
**D-5412 Ransbach-Baumbach (DE)**

(72) Erfinder : **Kuhl, Rheinhard**
**Weststrasse 4b**
**D-5431 Niederrahr (DE)**

(74) Vertreter : **Quermann, Helmut, Dipl.-Ing.**
**Postfach 6145 Gustav-Freytag-Strasse 25**
**D-6200 Wiesbaden (DE)**

## Beschreibung

Die Neuerung betrifft einen Füllkörper für Stoffaustauschkolonnen aus einem flachen Grundkörper mit mehreren parallel nebeneinander angeordneten, beidseitig vor dem Rand endenden Durchschnitten, dessen zwischen den Enden und den Schnitten liegende Teile von Teil zu Teil gegensinnig bügelförmig ausgebogen sind.

Füllkörper der genannten Art sind bekannt. Sie haben sich in Stoffaustauschkolonnen bewährt. Liegen jedoch solche Füllkörper mit ihrer Längsachse waagerecht oder stehen sie senkrecht, sind relativ wenig Kanten vorhanden, von denen die Flüssigkeit abtropfen kann, und können die Gase relativ glatt durch den Füllkörper strömen. Dessen ungeachtet ist in einer Schüttung aus solchen Füllkörpern in einer Stoffaustauschkolonne der Druckverlust relativ hoch und die Randgängigkeit relativ stark.

Aufgabe vorliegender Erfindung ist es, einen Füllkörper der eingangs genannten Art zu schaffen, der unabhängig von seiner Lage in der Schüttung eine möglichst große Anzahl von Kanten aufweist, von denen die Flüssigkeit abtropfen kann, und mit dem erreicht wird, daß die Gase praktisch nicht durch die Schüttung strömen können, ohne mit der Flüssigkeit in Berührung zu kommen.

Diese Aufgabe wird im wesentlichen durch einen Füllkörper der eingangs genannten Art gelöst, dessen Grundkörper aus mehreren nebeneinander angeordneten Streifen mit Durchschnitten besteht, dessen einander zugekehrte, nicht durchschnittene Ränder zwischen zwei benachbarten Streifen miteinander verbunden sind und dessen freie Ränder zusammengebogen sind.

In einer Schüttung hat ein solcher Füllkörper in jeder Lage praktisch gleich viel Stege, Öffnungen und Kanten, was zu einer sehr gleichmäßigen Verteilung von Gas und Flüssigkeit in der Schüttung führt. Die durch die Schüttung strömenden Gase und die durch die Schüttung fließende Flüssigkeit kommen also sehr innig miteinander in Berührung, so daß ein guter Stoffaustausch erfolgt. Der Druckabfall in einer Schüttung aus solchen Füllkörpern ist trotz der erfindungsgemäßen Gestaltung sehr gering. Eine Randgängigkeit ist praktisch nicht mehr vorhanden.

Das Verhältnis von Höhe zum Durchmesser sollte bei einem solchen Füllkörper etwa 1 : 1 betragen. Dieses Verhältnis ist jedoch variabel. Muß viel Flüssigkeit durch die Schüttung fließen und nur wenig Gas durch diese strömen, sollte die Höhe größer gewählt werden, weil dann die Verteilung des Gases in der Schüttung besser ist. Fließt umgekehrt nur wenig Flüssigkeit durch die Schüttung, aber strömt viel Gas durch diese, sollte die Höhe kleiner gewählt werden, weil dann der Druckverlust geringer ist.

Um eine Schüttung zu erhalten, die möglichst viele Kanten aufweist und möglichst viele Punkte besitzt, von denen die Flüssigkeit abtropfen kann, ist es vorteilhaft, die zur einen Seite oder nach beiden Seiten ausgebogenen Teile im Zenitabschnitt noch mit einer oder mehreren konkaven Einwölbungen zu versehen. Dabei ist es möglich, die zur einen Seite oder nach beiden Seiten ausgebogenen Teile im Zenitabschnitt abwechselnd mit einer oder mehreren konkaven Einwölbungen zu versehen. Als vorteilhaft erwies es sich jedoch, wenn nur die zur einen Seite ausgebogenen Teile im Zenitabschnitt konkave Einwölbungen besitzen.

Zur weiteren Erhöhung der Punkte, an denen die Flüssigkeit abtropfen kann, können die zwischen den Schnitten liegenden Teile teilweise, zweckmäßig abwechselnd, durchtrennt sein, und zwar sowohl die nach der einen Seite ausgebogenen Teile, als auch die nach der anderen Seite ausgebogenen Teile, als auch die zu beiden Seiten ausgebogenen.

Der Füllkörper sollte aus einem plattenförmigen Grundkörper mit zumindest drei nebeneinander angeordneten Streifen bestehen, die mit ihren freien Rändern zusammengebogen sind. Als vorteilhaft erwies es sich dabei, einen plattenförmigen Grundkörper zu verwenden, der aus vier nebeneinander angeordneten Streifen besteht und der mit den freien Rändern zusammengebogen ist. Es entsteht so ein quaderförmiger Füllkörper mit einer sehr großen Anzahl freier Kanten und Abtropfpunkten. Die nicht durchschnittenen Ränder sollten dabei die Mittellinien der Seitenflächen eines Quaders bilden. Sind die Zenitabschnitte der bügelförmigen Auswölbungen der einen Seite mit konkaven Einwölbungen versehen, sollten diese konkaven Einwölbungen dann konkav eingewölbte Kanten des quaderförmigen Füllkörpers bilden.

Weitere Merkmale der Erfindung sind in der Beschreibung der Figuren und in den Unteransprüchen dargestellt, wobei bemerkt wird, daß alle Einzelmerkmale und alle Kombinationen von Einzelmerkmalen erfindungswesentlich sind.

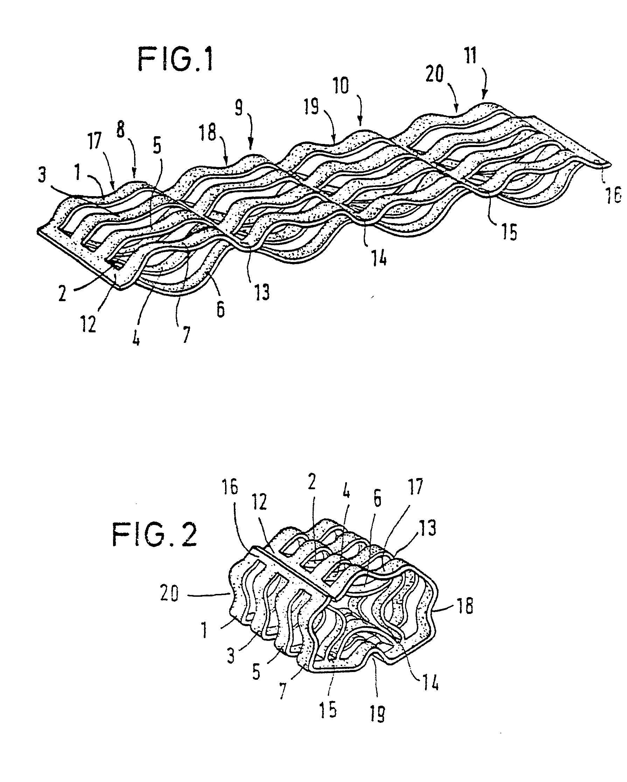

In den Fig. 1 und 2 ist die Erfindung an einer Ausführungsform beispielsweise dargestellt, ohne auf diese Ausführungsform beschränkt zu sein.

Figur 1 zeigt einen plattenförmigen, aus vier Streifen bestehenden Grundkörper als Vorstufe zur erfindungsgemäßen Ausführungsform der Fig. 2 in perspektivischer Ansicht und

Figur 2 einen quaderförmigen Füllkörper aus einem plattenförmigen Grundkörper nach Fig. 1 in perspektivischer Ansicht.

Der plattenförmige Grundkörper nach Fig. 1 besteht aus vier nebeneinander angeordneten Streifen 8, 9, 10 und 11, von denen jeder Streifen 8 bis 11 sechs parallel nebeneinander liegende Durchschnitte aufweist, die beidseitig kurz vor den Rändern 12, 13, 14, 15 und 16 enden. Zwischen zwei benachbarten Streifen 8, 9 ; 9, 10 und 10, 11 sind diese durch die Ränder 13, 14 und 15 miteinander verbunden. Die zwischen den Enden eines jeden Streifens 8, 9, 10 und 11 sowie zwischen den Schnitten in einem jeden Streifen liegenden Teile 1, 2, 3, 4, 5, 6 und 7 sind von Teil 1, 3, 5 und 7 zu Teil 2, 4 und 6 gegensinnig bügelförmig ausgebogen. Die bügelförmigen Teile 1, 3, 5 und 7, die zur einen Seite ausgebogen sind, weisen im Zenitabschnitt parallel nebeneinander liegende, konkave Einwölbungen 17, 18, 19 und 20 auf.

Dieser plattenförmige Grundkörper nach Fig. 1 wird zu einem quaderförmigen Füllkörper gebogen, wie er in Fig. 2 dargestellt ist. Der aus vier nebeneinander angeordneten Streifen 8, 9, 10 und 11 bestehende plattenförmige Grundkörper ist mit den freien Rändern 12 und 16 zusammengebogen. Die nicht durchschnittenen Ränder 12 + 16, 13, 14 und 15 bilden in etwa die Mittellinie der Seitenflächen des quaderförmigen Füllkörpers. Die im Zenitabschnitt konkave Einwölbungen 17, 18, 19 und 20 aufweisenden Teile 1, 3, 5 und 7 sind nach außen gerichtet, während die anderen Teile 2, 4 und 6 nach innen gerichtet sind und ein kreuzförmig gestaltetes Innenteil bilden. Die in den Zenitabschnitten parallel nebeneinander liegenden Einwölbungen 17, 18, 19 und 20 der Teile 1, 3, 5 und 7 bilden bei dieser Gestaltung konkav eingewölbte Kanten des quaderförmigen Füllkörpers. Bei dieser Gestaltung wird ein Füllkörper erhalten, der eine sehr große Anzahl freier Kanten aufweist und, dadurch bedingt, völlig unabhängig von seiner Lage in der Schüttung in einer Stoffaustauschkolonne, eine sehr große Anzahl an Abtropfpunkten für eine Flüssigkeit besitzt. Der Druckverlust, der durch einen solchen Füllkörper in einer Stoffaustauschkolonne entsteht, und die Randgängigkeit ist relativ gering. Dabei ist die Herstellung eines solchen Füllkörpers relativ einfach, weil er aus einem Metallabschnitt gestanzt, dann ausgewölbt und anschließend zusammengebogen werden kann. Selbstverständlich kann ein solcher Füllkörper nicht nur aus metallischem Material hergestellt werden, sondern auch aus Kunststoff und dergleichen.

Nicht alle zur einen Seite ausgebogenen Teile 1, 3, 5, 7 bzw. 2, 4, 6 können im Zenitabschnitt mit einer konkaven Einwölbung versehen sein. Es ist auch möglich, nur einen Teil der ausgebogenen Teile 1, 3, 5, 7 bzw. 2, 4, 6 zum Beispiel abwechselnd mit solchen Einwölbungen zu versehen. Auch ist es möglich, solche Einwölbungen beidseitig vorzusehen. Auch können die ausgebogenen Teile teilweise, z. B. abwechselnd, durchtrennt und abgebogen sein.

## Patentansprüche

1. Füllkörper für Stoffaustauschkolonnen aus einem flachen Grundkörper mit mehreren parallel nebeneinander angeordneten, beidseitig vor dem Rand endenden Durchschnitten, dessen zwischen den Enden und den Schnitten liegende Teile (1 bis 7) von Teil (1, 3, 5, 7) zu Teil (2, 4, 6) gegensinnig bügelförmig aus gebogen sind, dadurch gekennzeichnet, daß der Grundkörper aus mehreren nebeneinander angeordneten Streifen (8 bis 11) mit Durchschnitten besteht, die einander zugekehrten, nicht durchschnittenen Ränder (12 bis 16) zwischen zwei benachbarten Streifen (8, 9 ; 9, 10 ; 10, 11) miteinander verbunden sind und die freien Ränder (12 ; 16) zusammengebogen sind.

2. Füllkörper nach Anspruch 1, dadurch gekennzeichnet, daß die zur einen Seite oder nach beiden Seiten ausgebogenen Teile (1, 3, 5, 7 ; 2, 4, 6) im Zenitabschnitt eine oder mehrere konkave Einwölbungen (17, 18, 19, 20) besitzen.

3. Füllkörper nach Anspruch 1, dadurch gekennzeichnet, daß die zur einen Seite oder nach beiden Seiten ausgebogenen Teile im Zenitabschnitt abwechselnd (1, 5 ; 3, 7 ; 2, 6 ; 4) eine oder mehrere konkave Einwölbungen besitzen.

4. Füllkörper nach Anspruch 1, dadurch gekennzeichnet, daß die zur einen Seite ausgebogenen Teile (1, 3, 5, 7 oder 2, 4, 6) im Zenitabschnitt konkave Einwölbungen besitzen.

5. Füllkörper nach einem oder mehreren der Ansprüche 1 bis 4, dadurch gekennzeichnet, daß die zwischen den Schnitten liegenden Teile (1 bis 7) teilweise durchtrennt sind.

6. Füllkörper nach Anspruch 5, dadurch gekennzeichnet, daß die zwischen den Schnitten liegenden Teile (1 bis 7) abwechselnd (1, 3, 5, 7 bzw. 2, 4, 6) durchtrennt sind.

7. Füllkörper nach Anspruch 6, dadurch gekennzeichnet, daß die zwischen den Schnitten liegenden, nach der einen und/oder der anderen Seite ausgebogenen Teile (1, 3, 5, 7 bzw. 2, 4, 6) abwechselnd (1, 5 ; 3, 7 ; 2, 6 ; 4) durchtrennt sind.

8. Füllkörper nach einem oder mehreren der Ansprüche 1 bis 7, dadurch gekennzeichnet, daß er aus zumindest drei nebeneinander angeordneten Streifen (8, 9, 10) besteht, die mit ihren freien Rändern zusammengebogen sind.

9. Füllkörper nach Anspruch 8, dadurch gekennzeichnet, daß er aus vier nebeneinander angeordneten Streifen (8, 9, 10, 11) besteht, die mit ihren freien Rändern (12, 16) zusammengebogen sind.

10. Füllkörper nach Anspruch 9, dadurch gekennzeichnet, daß die nicht durchschnittenen Ränder (12 + 16, 13, 14, 15) in etwa die Mittellinien der Seitenflächen eines quaderförmigen Füllkörpers bilden.

11. Füllkörper nach Anspruch 10, dadurch gekennzeichnet, daß in den Zenitabschnitten parallel nebeneinander liegende Einwölbungen (17, 18, 19, 20) konkav eingewölbte Kanten des quaderförmigen Füllkörpers bilden.

12. Füllkörper nach einem oder mehreren der Ansprüche 1 bis 11, dadurch gekennzeichnet, daß er aus einem metallischen Material besteht.

13. Füllkörper nach einem oder mehreren der Ansprüche 1 bis 12, dadurch gekennzeichnet, daß die Höhe größer ist als der Durchmesser.

14. Füllkörper nach einem oder mehreren der Ansprüche 1 bis 12, dadurch gekennzeichnet,

daß der Durchmesser größer ist als die Höhe.

**Claims**

1. Packing element for material exchange columns, which comprises a flat basic element having a plurality of through cuts which are arranged parallel adjacent one another and which terminate at both sides short of the edge, the portions (1 to 7) of said basic element which are situated between the ends and the cuts being bent out in bowed form in opposite directions from part (1, 3, 5, 7) to part (2, 4, 6), characterised in that the basic element consists of a plurality of strips (8 to 11) having through cuts and situated adjacent one another, the edges (12 to 16) which are not cut through and which are directed towards one another between two adjacent strips (8, 9 ; 9, 10 ; 10, 11) are joined to one another, and the free edges (12 ; 16) are bent to meet one another.

2. Packing element according to claim 1, characterised in that the portions (1, 3, 5, 7 ; 2, 4, 6) bent out to one side or to both sides comprise in the zenith region one or more concave arches (17, 18, 19, 20).

3. Packing element according to claim 1, characterised in that the portions bent out to one side or to both sides comprise one or more concave arches in the zenith region alternately (1, 5 ; 3, 7 ; 2, 6 ; 4).

4. Packing element according to claim 1, characterised in that the portions (1, 3, 5, 7 or 2, 4, 6) bent out to one side comprise concave arches in the zenith region.

5. Packing element according to one or more of claims 1 to 4, characterised in that the portions (1 to 7) situated between the cuts are partially severed.

6. Packing element according to claim 5, characterised in that the portions (1 to 7) situated between the cuts are alternately (1, 3, 5, 7 ; 2, 4, 6) severed.

7. Packing element according to claim 6, characterised in that the portions (1, 3, 5, 7 and 2, 4, 6 respectively) situated between the cuts and bent out to one side and/or the other side are alternately (1, 5 ; 3, 7 ; 2, 6 ; 4) severed.

8. Packing element according to one or more of claims 1 to 7, characterised in that it consists of at least three strips (8, 9, 10) which are arranged adjacent one another and which have their free edges bent together.

9. Packing element according to claim 8, characterised in that it consists of four strips (8, 9, 10, 11) which are arranged adjacent one another and which have their free edges (12, 16) bent together.

10. Packing element according to claim 9, characterised in that the edges (12 + 16, 13, 14, 15) form substantially the centre lines of the side surfaces of a parallelepipedic packing element.

11. Packing element according to claim 10, characterised in that arches (17, 18, 19, 20) situated parallel adjacent one another in the zenith regions form concavely arched edges of the parallelepipedic packing element.

12. Packing element according to one or more of claims 1 to 11, characterised in that it is made of a metallic material.

13. Packing element according to one or more of claims 1 to 12, characterised in that the height is greater than the diameter.

14. Packing element according to one or more of claims 1 to 12, characterised in that the diameter is greater than the height.

**Revendications**

1. Corps de remplissage pour colonnes d'échange de substances, réalisés à partir d'un corps de base plat, comportant de nombreuses lumières, disposées parallèlement à côté les unes des autres, se terminant aux deux bouts avant le bord, dont les tronçons (1 à 7), qui se trouvent entre les extrémités et les lumières sont courbées en étrier, en sens contraire d'un tronçon (1, 3, 5, 7) à l'autre (2, 4, 6), corps de remplissage caractérisé en ce que le corps de base est constitué avec les lumières de plusieurs bandes (8 à 11) disposées les unes à côté des autres, les bords (12 à 16) sans lumières tournés les uns vers les autres, sont reliés l'un avec l'autre entre deux bandes (8, 9 ; 9, 10 ; 10, 11) adjacentes, et les bords libres (12, 16) sont pliés ensemble.

2. Corps suivant la revendication 1, caractérisé en ce que les tronçons (1, 3, 5, 7 ; 2, 4, 6) repliés par rapport à un côté ou vers les deux côtés possèdent, dans la zone de leur sommet une ou plusieurs ondulations concaves (17, 18, 19, 20).

3. Corps suivant la revendication 1, caractérisé en ce que les tronçons repliés par rapport à un côté ou vers les deux côtés (1, 3, 5, 7 ou 2, 4, 6) possèdent dans la zone de leur sommet alternativement une ou plusieurs ondulations concaves.

4. Corps suivant la revendication 1, caractérisé en ce que les tronçons (1, 3, 5, 7 ou 2, 4, 6) repliés par rapport à un côté, possèdent, dans la zone du sommet des ondulations concaves.

5. Corps suivant une ou plusieurs des revendications 1 à 4, caractérisé en ce que les tronçons (1 à 7) situés entre les lumières sont partiellement séparés.

6. Corps suivant la revendication 5, caractérisé en ce que les tronçons qui se trouvent entre les lumières (1 à 7) sont séparés alternativement (1, 3, 5, 7 ou 2, 4, 6).

7. Corps suivant la revendication 6, caractérisé en ce que les tronçons (1, 3, 5, 7 ou 2, 4, 6) placés entre les lumières, vers l'un des et/ou vers l'autre côté, alternativement (1, 5, 3, 7 : 2, 6, 4) sont séparés.

8. Corps suivant l'une ou plusieurs des revendications 1 à 7, caractérisé en ce qu'il est constitué d'au moins trois bandes (8, 9, 10) disposées côte à côte qui sont repliées ensemble par leurs bords libres.

9. Corps suivant la revendication 8, caractérisé en ce qu'il est constitué par au moins quatre bandes (8, 9, 10, 11), qui sont repliées ensemble par leurs bords libres (12, 16).

10. Corps suivant la revendication 9, caractérisé en ce que les bords (12 + 16, 13, 14, 15) non traversés forment, sensiblement sur les lignes centrales des surfaces latérales d'un corps de remplissage parallèlipipèdique.

11. Corps suivant la revendication 10, caractérisé en ce que les bords à courbure concave du corps de remplissage parallèlipipédique forment, dans les tronçons du sommet, des ondulations (17, 18, 19, 20) qui sont placées parallèlement côte à côte.

12. Corps suivant une ou plusieurs des revendications 1 à 11, caractérisé en ce qu'il est constitué par un matériau métallique.

13. Corps suivant une ou plusieurs des revendications 1 à 12, caractérisé en ce que la hauteur est plus grande que le diamètre.

14. Corps suivant une ou plusieurs des revendications 1 à 12, caractérisé en ce que le diamètre est plus grand que la hauteur.

# FIG.1

# FIG.2